# FASCICULE DE BREVET EUROPEEN

(11) **EP 4 551 445 B1**
(45) Date de publication et mention de la délivrance du brevet: **25.03.2026**
(21) Numéro de dépôt: 23731271.5
(22) Date de dépôt: 07.06.2023
(51) Int. Cl.: B62B 5/04

(54) **CHARIOT DE TRANSPORT À ROULETTES SUSPENDUES DOTÉ D'UN PATIN D'IMMOBILISATION**
TRANSPORTWAGEN MIT AUFGEHÄNGTEN ROLLEN UND MIT EINEM IMMOBILISIERUNGSKISSEN
TRANSPORT TROLLEY WITH SUSPENDED CASTORS AND PROVIDED WITH AN IMMOBILISING PAD

(30) Priorité: 07.07.2022 FR 2206939
(43) Date de publication de la demande: 14.05.2025
(73) Titulaire: Renault s.a.s, 92100 Boulogne Billancourt (FR)
(72) Inventeur: RIO, Franck, 72000 LE MANS (FR)
(86) Numéro de dépôt international: PCT/EP2023/065216
(87) Numéro de publication internationale: WO 2024/008379

(56) Documents cités:
- CN-A- 102 923 375
- CN-A- 106 931 280
- US-A- 2 712 366
- US-A- 4 655 466
- US-A1- 2006 082 088

## Description

La présente invention concerne un chariot de transport à roulettes suspendues doté d'un patin d'immobilisation.

Afin de lever toute ambiguïté pour la compréhension de l'invention, les notions de « chariot » et « chariot de transport » sont équivalentes.

Un chariot de transport selon l'invention englobe à la fois un simple chariot pouvant être poussé à la main, et une base roulante pouvant être poussée à la main et tractable.

Un tel chariot de transport**,** tels que ceux décrits dans les documents US 2006/082088 A1, CN 106 931 280 A, CN 102 923 375 A, US 2 712 366 A ou US 4 655 466 A, comprend une structure roulante horizontale montée sur une pluralité de roulettes associées chacune à une suspension. Différents objets sont déposés sur la structure roulante, puis le chariot est déplacé manuellement ou au moyen d'une motorisation pour convoyer ces objets vers une destination précise dans une installation. Un tel déplacement peut faire quelques dizaines de mètres, mais peut également atteindre plusieurs kilomètres. Ce chariot peut ou non comporter un élément de guidage sous la forme d'une barre de manoeuvre, apte à orienter le chariot lors de son déplacement pour atteindre la destination recherchée. Durant certaines phases d'utilisation de ce chariot, par exemple lors d'un chargement ou d'un déchargement de celui-ci, il est impératif que ledit chariot soit stabilisé sur le sol, sous peine de rendre ce chargement ou ce déchargement très compliqué. En effet, lors de telles opérations, si le chariot était libre de tout mouvement, il serait difficile de le maintenir immobile, et il effectuerait alors des déplacements brusques et intempestifs dans n'importe quelle direction, à chaque chargement ou déchargement d'objets. Il existe deux autres situations liées à un possible déplacement du chariot :
- lorsqu'un cariste tente de déposer ou de prendre une charge sur le moyen roulant,
- lorsque le sol est en pente.
Afin de régler ce problème de déplacement inopinés et donc non maitrisés, les chariots sont généralement dotés d'un patin d'immobilisation, dont l'activation manuelle permet audit patin qui était initialement placé au-dessus du sol, d'être translaté verticalement vers le bas, pour venir en appui étroit contre ledit sol et constituer une butée de blocage. Une fois que ce patin est en contact avec le sol, il soulève très légèrement le chariot, empêchant ledit chariot de se déplacer sur le sol.

Les patins d'immobilisation actuels sont conçus pour ne fonctionner qu'avec des chariots possédant des roulettes sans suspension. Or, la principale différence entre un chariot qui est muni de roulettes avec suspension et un chariot qui est muni de roulettes sans suspension, est que la structure roulante d'un chariot qui est muni de roulettes avec suspension peut s'abaisser de façon significative sous l'effet de la masse des objets qui sont déposés sur ladite structure roulante. Cet abaissement significatif peut par exemple correspondre à plusieurs centimètres. Pour ces chariots possédant des roulettes à suspension, l'activation d'un patin d'immobilisation peut s'avérer compliquée voire impossible manuellement, lorsque le poids des objets déposés sur la structure_roulante desdits chariots est très élevé. En effet, dans ces circonstances, il faudrait fournir un effort très élevé voire immense pour parvenir à soulever ladite structure roulante.

Un chariot de transport selon l'invention possède des roulettes à suspension et dispose d'un patin d'immobilisation conçu pour pouvoir être facilement actionné, quelle que soit la masse des objets déposés sur la structure roulante dudit chariot de transport.

L'invention a pour objet un chariot de transport comprenant une structure roulante, des roulettes suspendues sur lesquelles est montée ladite structure roulante, un patin d'immobilisation et un mécanisme d'activation de ce patin d'immobilisation pour empêcher le chariot de se déplacer sur un sol par l'intermédiaire desdites roulettes suspendues, caractérisé en ce que le mécanisme d'activation du patin d'immobilisation comprend :
- un corps principal creux arrimé à une surface inférieure de la base roulante et s'étendant verticalement,
- un coulisseau creux se terminant par une extrémité élargie, ledit coulisseau étant introduit dans le corps principal de sorte que son extrémité élargie constitue sa partie la plus basse,
- une tige autour de laquelle s'étend un premier ressort, ladite tige et ledit premier ressort étant introduits dans le coulisseau,
- un compensateur cylindrique auquel est fixé le patin d'immobilisation, ledit compensateur étant inséré entre le premier ressort et une surface interne du coulisseau en venant en butée contre ledit premier ressort, de sorte que le patin d'immobilisation émerge de l'extrémité élargie du coulisseau,
- une pédale de verrouillage montée en rotation autour d'un premier axe de rotation du corps principal creux, ladite pédale de verrouillage étant apte à passer par rotation d'une position de désactivation pour laquelle elle s'étend horizontalement à une position d'activation pour laquelle elle s'étend verticalement,
- une bielle allongée dont une extrémité supérieure est montée en rotation autour d'un deuxième axe de rotation de la pédale de verrouillage, et dont une extrémité inférieure est montée en rotation autour d'un troisième axe de rotation de l'extrémité élargie du coulisseau, et lors du passage de la pédale de verrouillage de la position de désactivation à la position d'activation, la bielle pivote autour du deuxième axe de rotation de ladite pédale de verrouillage pour se retrouver alignée le long de la pédale de verrouillage dans une direction sensiblement verticale, le coulisseau passant simultanément d'une position remontée à une position descendue.

Tous les éléments présents dans le mécanisme de déploiement du patin d'immobilisation d'un chariot de transport selon l'invention, sont dimensionnés et sont agencés entre eux pour permettre de déployer le patin d'immobilisation avec un effort réduit, quelle que soit le poids des objets déposés sur la structure roulante. Schématiquement, la mise en rotation de la pédale de verrouillage pour atteindre la position d'activation, entraine une rotation de la bielle, qui va induire dans un premier temps un abaissement du coulisseau s'accompagnant d'un étirement du premier ressort jusqu'à ce que le patin d'immobilisation initialement au-dessus du sol, parvienne au contact de celui-ci. Cet abaissement s'effectue au prix d'un certain effort, car l'étirement du premier ressort va à l'encontre de sa tendance naturelle à se comprimer. La rotation de la pédale de verrouillage se poursuit une fois que le patin de verrouillage a atteint le sol, jusqu'à ce que la bielle et ladite pédale de verrouillage soient alignées l'une sur l'autre suivant une direction sensiblement verticale. Durant cette deuxième phase, le premier ressort se comprime naturellement dans le coulisseau pour tenter de retrouver sa position de relaxation, créant une pression entre le sol et le dessous du chariot roulant. C'est essentiellement grâce à la compression naturelle du premier ressort que la base roulante pourra être facilement surélevée au moyen de la pédale de verrouillage. En fonction du poids des objets déposés sur la base roulante, le compensateur à l'extrémité duquel est fixé le patin d'immobilisation, va rentrer plus ou moins dans le coulisseau. C'est essentiellement grâce à la compression naturelle du premier ressort, que la structure roulante pourra être facilement surélevée au moyen de la pédale de verrouillage, sans qu'un opérateur n'ait à fournir un effort marqué pour lutter contre le poids des objets déposés sur la structure roulante. Préférentiellement, le coulisseau et le tube sont de forme cylindrique. Avantageusement, la pédale de verrouillage est matérialisée par une tige rectiligne. Afin de lever toute ambiguïté, lorsque la pédale de verrouillage est dans la position de désactivation, le patin d'immobilisation est au-dessus du sol et n'a aucune fonction spécifique, et lorsque ladite pédale de verrouillage est dans la position d'activation, le patin d'immobilisation est en contact étroit avec le sol pour empêcher tout déplacement du chariot sur ledit sol.

Selon une caractéristique possible de l'invention, la bielle comprend deux bras écartés et parallèles et le corps principal comprend deux parois planes écartées et parallèles, les deux bras de la bielle enserrant les deux parois parallèles du corps principal creux. Une bielle possédant deux bras parallèles est plus robuste qu'une bielle ne possédant qu'un seul bras. De plus, grâce à la présence de ses deux bras qui encadrent le corps principal, la bielle agit de façon homogène et équilibrée au sein du mécanisme de déploiement du patin d'immobilisation.

Selon une caractéristique possible de l'invention, la pédale de verrouillage comprend deux tronçons séparés et parallèles, la pédale de verrouillage étant montée sur le corps principal en enserrant les deux bras de la bielle. Une pédale de verrouillage possédant deux tronçons parallèles est plus robuste qu'une pédale de verrouillage ne possédant qu'un seul tronçon. De plus, grâce à la présence de ses deux tronçons qui encadrent les deux bras de la bielle, la pédale de verrouillage agit de façon homogène et équilibrée au sein du mécanisme de déploiement du patin d'immobilisation.

Selon une caractéristique possible de l'invention, la pédale de verrouillage se termine par un segment replié à angle droit, ledit segment replié servant de surface d'appui pour le pied d'un opérateur désireux de faire pivoter la pédale de verrouillage autour du premier axe de rotation vers la position d'activation. Ce segment replié à angle droit, sert à faciliter la mise en appui du pied d'un opérateur contre la pédale de verrouillage, afin de faire pivoter ladite pédale de verrouillage.

Selon une caractéristique possible de l'invention, le premier axe de rotation, le deuxième axe de rotation et le troisième axe de rotation s'étendent horizontalement.

Selon une caractéristique possible de l'invention, le patin d'immobilisation est cylindrique et est fixé à une extrémité du compensateur cylindrique au moyen d'une vis. Avantageusement, le patin d'immobilisation prolonge idéalement le compensateur sans déborder latéralement de celui-ci. Préférentiellement, l'épaisseur du patin d'immobilisation est supérieure ou égale à 0.5mm de manière à constituer une pièce robuste et peu susceptible de s'user rapidement.

Selon une caractéristique possible de l'invention, le mécanisme d'activation comprend une pédale de déverrouillage montée pivotante autour d'un quatrième axe de rotation du corps principal et possédant un pion de poussée, ledit mécanisme comprenant un deuxième ressort précontraint dont une extrémité est fixée au corps principal et dont une autre extrémité est fixée à l'extrémité élargie du coulisseau, une mise en rotation de la pédale de déverrouillage autour du quatrième axe de rotation pour désactiver le patin d'immobilisation entrainant une mise en appui du pion de poussée contre la bielle, qui se désaligne alors de la pédale de verrouillage, le mouvement de la bielle étant favorisé par une compression du deuxième ressort tendant à retrouver sa position de repos et entrainant une remontée du coulisseau. La désactivation du patin d'immobilisation aurait pu se faire au moyen de la pédale de verrouillage. En effet, il aurait suffi de faire pivoter la pédale de verrouillage en sens inverse depuis sa position d'activation, pour atteindre la position de désactivation. Mais dans sa position d'activation, la pédale de verrouillage demeure très difficile à manipuler, car il faudrait qu'un opérateur puisse glisser son pied sous cette pédale de verrouillage qui est très proche du sol, puis fournisse un effort pour la faire pivoter en sens inverse. La pédale de déverrouillage se manipule simplement, au moyen d'une simple pression du pied pour désactiver le patin d'immobilisation. Le pion de poussée et le deuxième ressort sont introduits dans le mécanisme, pour faciliter le déplacement en sens inverse de tous les éléments qui ont été déplacés lors du placement de la pédale de verrouillage dans la position d'activation. Le terme « sens inverse » doit être interprété par rapport au sens de manipulation de la pédale de verrouillage pour passer de la position de désactivation à la position d'activation.

Selon une caractéristique possible de l'invention, la pédale de déverrouillage est reliée au corps principal au moyen d'un troisième ressort précontraint nécessitant l'application d'un certain effort sur la pédale de déverrouillage pour vaincre ledit troisième ressort, lorsque la pédale de déverrouillage est mise en rotation autour du quatrième axe de rotation pour désactiver le patin d'immobilisation.

L'invention a pour autre objet un procédé d'activation du patin d'immobilisation d'un chariot de transport selon l'invention, la pédale de verrouillage étant supposée être dans une position de désactivation.

Selon l'invention, le procédé d'activation comprend les étapes suivantes :
- une étape de mise en rotation de la pédale de verrouillage autour du premier axe de rotation depuis la position de désactivation pour laquelle ladite pédale et la bielle sont écartés l'un de l'autre pour former un compas ouvert, cette mise en rotation s'effectuant au moyen d'une poussée exercée par le pied d'un opérateur sur ladite pédale de verrouillage et entrainant un pivotement de la bielle autour de ses deux extrémités vers une position verticale,
- une étape d'abaissement du coulisseau sous l'effet du pivotement de la bielle jusqu'à ce que le patin d'immobilisation touche le sol, le premier ressort étant précontraint jusqu'à ce que ledit patin d'immobilisation touche le sol,
- une étape de poursuite de la mise en rotation de la pédale de verrouillage alors que le patin d'immobilisation a déjà touché le sol, jusqu'à ce que la bielle arrive en bout de course dans une position verticale en étant alignée sur la pédale de verrouillage pour former un compas fermé, le premier ressort ayant amorcé une phase de compression juste après que le patin d'immobilisation a touché le sol, le coulisseau poursuivant son abaissement,
- une étape de création d'une pression entre le sol et le dessous du chariot de transport correspondant_à une compression maximale du premier ressort qui n'est pas une compression à 100%, puisque ce sont les suspensions des roulettes qui sont comprimées au maximum et qui assurent une butée mécanique pour la structure roulante, cette étape s'accompagnant une pénétration plus ou moins importante du compensateur doté du patin d'immobilisation à l'intérieur du coulisseau.

L'invention a pour autre objet un procédé de désactivation du patin d'immobilisation d'un chariot de transport selon l'invention, la pédale de verrouillage étant supposée être dans une position d'activation.

Selon l'invention, le procédé de désactivation, comprend les étapes suivantes :
- une étape de mise en rotation de la pédale de déverrouillage autour du quatrième axe de rotation, cette mise en rotation s'effectuant au moyen d'une poussée exercée par le pied d'un opérateur sur ladite pédale de déverrouillage, la bielle étant alignée le long de la pédale de verrouillage,
- une étape de mise en appui du pion de poussée contre la bielle entrainant un déplacement de ladite bielle qui commence à se désaligner de la pédale de verrouillage,
- une étape de compression du deuxième ressort précontraint qui tend à retrouver naturellement sa position de repos, cette étape de compression s'accompagnant d'une remontée du coulisseau auquel est fixée une extrémité dudit deuxième ressort,
- une étape de pivotement de la pédale de verrouillage vers sa position de désactivation, initiée par le pion de poussée et relayée par la compression du deuxième ressort,
- une étape de remontée du patin d'immobilisation qui n'est plus en contact avec le sol.

On donne ci-après une description détaillée d'un mode de réalisation préféré d'un chariot selon l'invention, en se référant aux figures suivantes :
[Fig. 1] est une vue de côté d'un mécanisme de patin d'immobilisation d'un chariot de transport selon l'invention,
[Fig. 2] est une vue en perspective en éclaté du mécanisme de la figure 1,
[Fig. 3] est une vue en perspective du mécanisme des figures 1 et 2, la pédale de verrouillage étant désactivée,
[Fig. 4] est une vue en perspective du mécanisme de la figure 3, la pédale de verrouillage étant activée,
[Fig. 5] est une vue de côté et en transparence d'une zone inférieure du mécanisme de la figure 4,
[Fig. 6] est une vue en perspective d'un mécanisme de patin d'activation d'un chariot de transport selon l'invention, montrant une la pédale de déverrouillage,
[Fig. 7] est une vue en perspective sous un autre angle du mécanisme de la figure 6,
[Fig. 8] est une vue de côté d'un mécanisme de patin d'immobilisation d'un chariot de transport selon l'invention, la pédale de verrouillage n'étant pas activée,
[Fig. 9] est une vue en coupe du mécanisme de la figure 8,
[Fig. 10] est une vue de côté d'un mécanisme de patin d'immobilisation d'un chariot de transport selon l'invention, la pédale de verrouillage étant activée et ledit chariot étant vide,
[Fig. 11] est une vue en coupe du mécanisme de la figure 10,
[Fig. 12] est une vue de côté d'un mécanisme de patin d'immobilisation d'un chariot de transport selon l'invention, la pédale de verrouillage étant activée et ledit chariot étant chargée,
[Fig. 13] est une vue en coupe du mécanisme de la figure 8,
[Fig. 14] est une vue en perspective d'un chariot de transport selon l'invention,

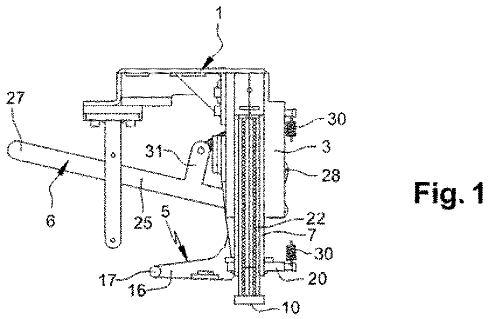

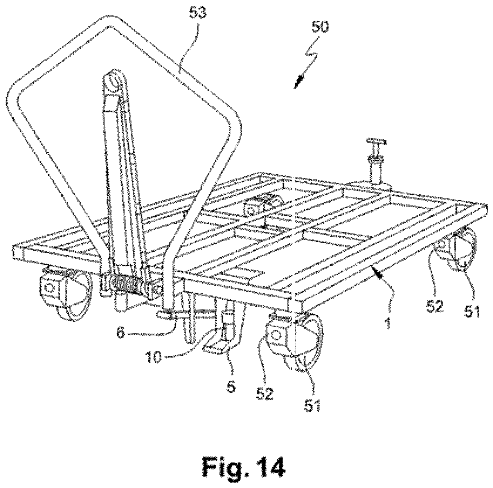

En se référant aux figures 1,2 et 14 un chariot de transport 50 selon l'invention comprend une structure roulante 1 montée sur une pluralité de roulettes 51 associées chacune à une suspension 52. La structure roulante 1 est plane et horizontale, et est destinée à être chargée avec des objets, qui seront convoyés vers une destination précise d'une installation, via un déplacement du chariot de transport 50. Cette structure roulante 1 peut par exemple être tubulaire de manière à alléger le chariot de transport 50. Ce chariot de transport 50 peut être équipé ou non d'un élément de guidage tel que par exemple une barre de manœuvre 53 appelée également main courante, pour orienter le chariot 50 lors de son déplacement. Le chariot 50 est amené à rouler sur le sol par l'intermédiaire de ses roulettes suspendues 51, 52. Une particularité de ce type de chariot 50, est que la structure roulante 1, en raison de la présence des roulettes suspendues 51, 52 peut être abaissée de façon significative, c'est-à-dire de quelques centimètres, si les objets à transporter et qui ont été déposés sur la structure roulante 1 sont lourds, typiquement supérieurs à plusieurs centaines de kilogrammes. Or, il est important de pouvoir immobiliser ce chariot de transport 50 lors par exemple de phases de chargement ou déchargement des objets à transporter. En effet, durant ces phases, si le chariot 50 n'était pas immobilisé il pourrait se déplacer brusquement et dans n'importe quelle direction, si une poussée accidentelle s'exerçait sur celui-ci. C'est également vrai, si le chariot 50 devait être arrêté alors qu'il se retrouve sur une pente. Sans le déploiement d'un patin d'immobilisation, il ne pourrait pas rester en place. Le déploiement d'un patin d'immobilisation est rendu compliqué sur un tel chariot 50, en raison de la présence de roulettes suspendues 51,52 qui contribuent à abaisser de façon significative, typiquement de quelques centimètres, la structure roulante 1 lorsque celle-ci est chargée avec des objets lourds. En effet, un relevage du chariot 50 pour rendre efficace le patin d'immobilisation, peut être rendu compliqué voire impossible à cause de la masse importante du chariot 50 due à la présence de ces objets lourds.

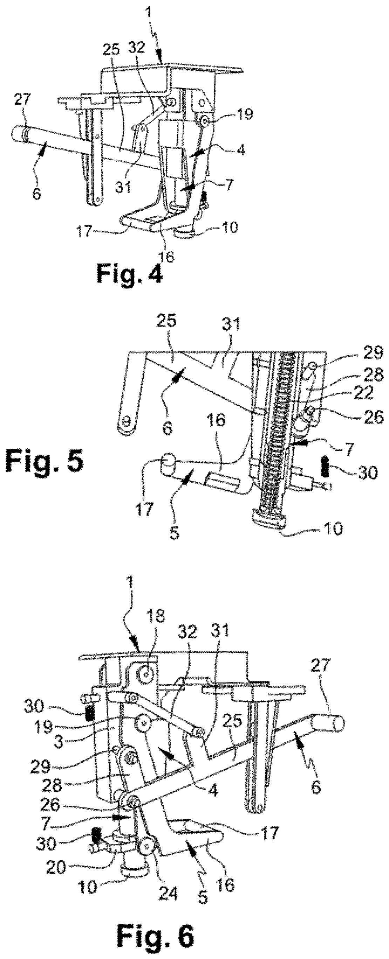

En se référant aux figures 1, 2, 3 et 4, pour résoudre ce problème de mise en œuvre d'un patin d'immobilisation 10 sur un chariot 50 possédant des roulettes suspendues 51, 52 un chariot 50 selon l'invention comprend une structure roulante 1 montée sur des roulettes à suspension 51, 52, et un mécanisme de déploiement dudit patin d'immobilisation 10 comportant :
- un corps principal 3 creux de forme sensiblement parallélépipédique,
- une bielle 4,
- une pédale de verrouillage 5,
- une pédale de déverrouillage 6,
- un coulisseau 7,
- un premier ressort 22,
- un compensateur 9,
- un patin d'immobilisation 10.

La bielle 4 comprend deux bras écartés 11, 12 et parallèles, lesdits deux bras étant reliés l'un à l'autre au moyen d'une bride 13. Préférentiellement, la bielle 4 comprenant les deux bras écartés 11, 12 et la bride 13 est réalisée en une seule et même pièce constituée d'un même matériau. Les deux bras 11, 12 sont plans et de faible épaisseur, et la bride 13 présente trois parois de faible épaisseur, dont deux parois latérales sont parallèles et prolongent chacune un bras 11, 12 et dont une paroi de liaison relie lesdites deux parois latérales en s'étendant perpendiculairement à celles-ci. La pédale de verrouillage 5 comprend deux tronçons 14, 15 séparés et parallèles, se terminant chacun par un segment replié 16 à environ 90°, lesdits deux segments 16 repliés étant reliés l'un à l'autre au moyen d'un segment de liaison 17. Les deux segments repliés 16 et le segment de liaison 17 délimitent un cadre terminal contre lequel le pied d'un opérateur exercera une pression pour déplacer ladite pédale de verrouillage 5 dans le but de déployer le patin d'immobilisation 10. La pédale de verrouillage 5 est montée en rotation autour d'un premier axe de rotation 18 du corps principal 3. Plus précisément, le corps principal 3 est délimité par deux parois latérales parallèles, et le premier axe 18 de rotation émerge d'une zone supérieure de surfaces externes desdites deux parois latérales. La bielle 4 est montée en rotation autour d'un deuxième axe de rotation 19 porté par la pédale de verrouillage 5, ledit deuxième axe 19 émergeant de surfaces externes des deux tronçons 14, 15 de ladite pédale de verrouillage 5. Le premier axe de rotation 18 et le deuxième axe de rotation 19 sont parallèles et s'étendent horizontalement. La pédale de verrouillage 5, la bielle 4 et le corps principal creux 3 sont agencés entre eux de telle sorte que :
- les deux bras 11, 12 de la bielle 4 enserrent les deux parois latérales parallèles du corps principal 3, et
- les deux tronçons 14, 15 de la pédale de verrouillage 5 enserrent les deux bras 11, 12 de la bielle 4.

Pour résumer, la pédale de verrouillage 5 est montée en rotation sur le corps principal 3 autour du premier axe de rotation 18, et la bielle 4 est montée en rotation sur la pédale de verrouillage 5 autour du deuxième axe de rotation 19 de sorte qu'elle se retrouve entre le corps principal 3 et la pédale de verrouillage 5.

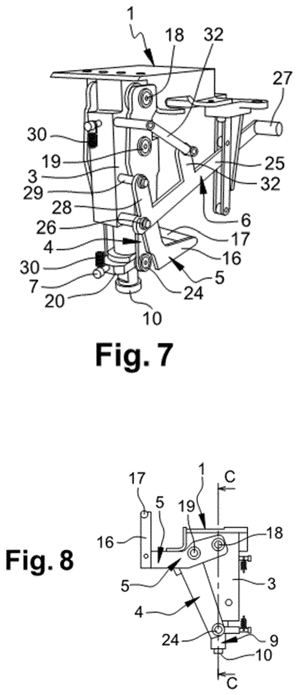

En se référant aux figures 1, 2, 3, 4, 5, 6 et 7, le coulisseau 7 est une pièce cylindrique creuse dont une extrémité considérée le long de son axe de révolution se termine par une collerette élargie 20. Une tige 21 autour de laquelle s'étend le premier ressort 22, est insérée dans le coulisseau 7. Le premier ressort 22, est libre d'être comprimé ou d'être étiré le long de la tige 21. Une butée cylindrique 23 est fixée au premier ressort 22, en étant placée autour dudit premier ressort 22. Lorsque la tige 21 et le premier ressort 22 sont insérés dans le coulisseau 7, ledit premier ressort 22 est en contact avec une paroi interne du coulisseau 7. Le coulisseau 7 est inséré dans le corps principal 3 de sorte qu'il s'étende dans une direction sensiblement verticale et que son extrémité se terminant par la collerette élargie 20 constitue sa partie la plus basse. Le coulisseau 7 est libre de coulisser verticalement dans le corps principal 3.

Le corps principal 3 prend naissance sur une surface inférieure de la structure roulante 1 et s'étend vers les bas sous ladite structure roulante 1, suivant une direction verticale. Chaque bras 11, 12 de la bielle 4 présente une extrémité supérieure qui est montée en rotation autour du deuxième axe de rotation 19 de la pédale de verrouillage 5, et une extrémité inférieure qui est montée en rotation autour d'un troisième axe de rotation 24 traversant la collerette élargie 20 de l'extrémité du coulisseau 7. L'extrémité supérieure et l'extrémité inférieure de chaque bras 11, 12 de la bielle 4 sont à considérer le long d'un axe longitudinal de la bielle, ladite extrémité supérieure étant placée au-dessus de l'extrémité inférieure. Le compensateur 9 est une pièce cylindrique creuse et le patin d'immobilisation 10 est une pièce cylindrique pleine dont le diamètre est sensiblement égal au diamètre du compensateur 9. Avantageusement, le patin d'immobilisation 10 est vissé à une extrémité du compensateur 9. Le compensateur 9 est introduit dans le coulisseau 7, de sorte que le patin d'immobilisation 10 émerge de la collerette élargie 20 dudit coulisseau 7, ledit compensateur 9 se retrouvant au moins en partie inclus dans ledit coulisseau 7 en entourant le premier ressort 22.

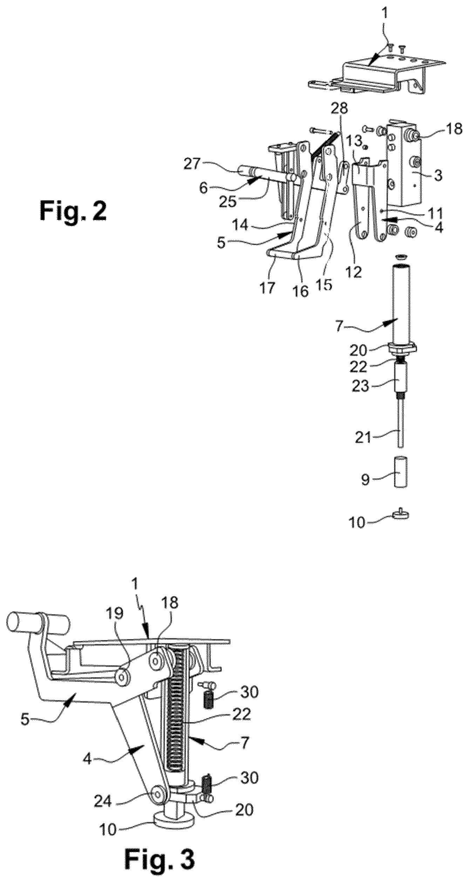

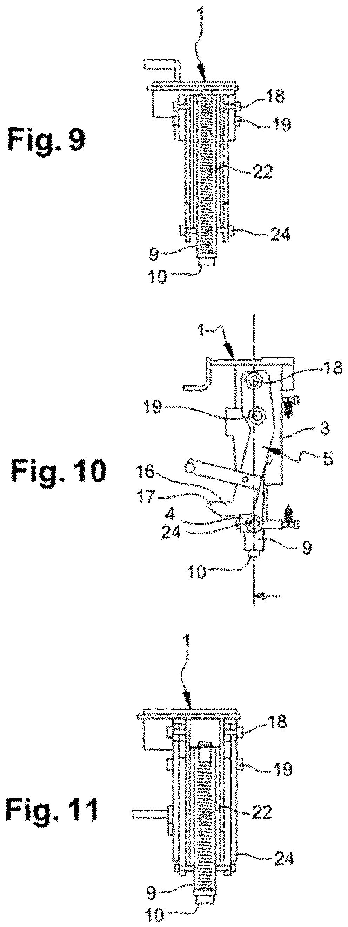

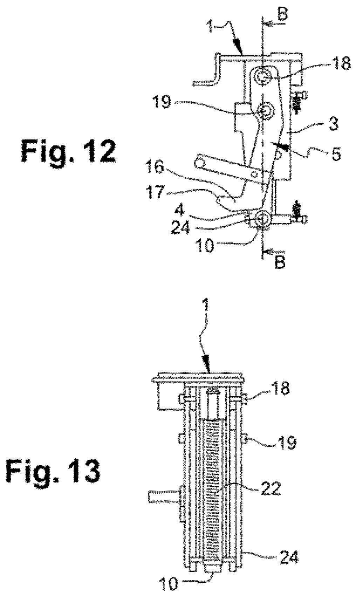

En se référant aux figures 3, 8 et 9, la pédale de verrouillage 5 peut occuper une position de désactivation pour laquelle le patin d'immobilisation 10 n'est pas activé. Pour cette position de désactivation, la pédale de verrouillage 5 s'étend horizontalement et le patin d'immobilisation10 est placé au-dessus du sol sans être en contact avec celui-ci. La bielle 4 et la pédale de verrouillage 5 forment un compas ouvert, dont l'axe de rotation serait matérialisé par le deuxième axe de rotation 19 autour duquel pivote la bielle 4. Dans ce compas ouvert, la bielle 4 et la pédale de verrouillage font entre eux un angle qui est supérieur à 90°. Un opérateur désireux de déployer le patin d'immobilisation 10 afin d'empêcher tout déplacement du chariot de transport 50 sur le sol, va exercer une pression avec son pied sur le cadre terminal 16, 17 de la pédale de verrouillage 5. Les étapes suivantes vont alors se succéder :
- Une étape de pivotement de la pédale de verrouillage autour du premier axe de rotation 18, entrainant une mise en rotation de la bielle 4 autour du deuxième axe de rotation 19, l'écart angulaire entre la pédale de verrouillage 5 et la bielle 4 diminuant progressivement. Autrement dit, l'ouverture angulaire du compas matérialisé par la bielle 4 et la pédale de verrouillage 5 se réduit progressivement au fur et à mesure que la pédale de verrouillage se rapproche de la position d'activation,
- une étape d'abaissement du coulisseau 7 se traduisant par un coulissement vertical dans le corps principal 3, sous l'effet de la mise en rotation de la bielle 4, jusqu'à ce que le patin d'immobilisation 10 vienne dans un premier temps au contact du sol. Durant cette phase, le premier ressort 22 s'est étiré et a donc été mis sous contrainte,
- une étape de poursuite du pivotement de la pédale de verrouillage 5, une fois que le patin d'immobilisation 10 a touché le sol, jusqu'à ce que ladite bielle 4 et ladite pédale de verrouillage 5 s'alignent l'un sur l'autre, le long d'une direction sensiblement verticale. Pour cette configuration, l'ouverture angulaire du compas formé par la bielle 4 et la pédale de verrouillage 5 devient nulle. La pédale de verrouillage 5 a alors atteint une position d'activation. En se référant aux figures 10 et 11, lorsque le chariot de transport 50 est faiblement chargé, le patin d'immobilisation 10 émerge assez nettement de l'extrémité élargie 20 du coulisseau 7 lorsque la pédale de verrouillage 5 est dans la position d'activation. En se référant aux figures 12 et 13, lorsque le chariot de transport 50est lourdement chargé, le patin d'immobilisation 10 n'émerge quasiment pas de l'extrémité élargie 20 du coulisseau 7, lorsque la pédale de verrouillage 5 est dans la position d'activation. Durant cette étape de poursuite du pivotement de la pédale de verrouillage 5, le premier ressort 22 qui a été mis auparavant sous contrainte, se comprime naturellement pour tenter de retrouver sa position de relaxation, entrainant une rétraction du compensateur 9 doté du patin d'immobilisation 10 dans le coulisseau 7. La compression du premier ressort 22 facilite le déploiement du patin d'immobilisation 10 grâce à une mise en pression dudit patin d'immobilisation 10 sur le sol. La compression du premier ressort 22 n'est pas une compression à 100%, puisque ce sont les suspensions 52 des roulettes 51 du chariot de transport 50 qui sont comprimées au maximum et qui assurent une butée mécanique pour la base roulante 1.

En se référant aux figures 1, 2, 4, 6, et 7, le mécanisme de déploiement du patin d'immobilisation 10 comprend une pédale de déverrouillage 6 pour désactiver ledit patin d'immobilisation 10. En effet, la désactivation du patin d'immobilisation 10 aurait pu se faire en provoquant une rotation en sens inverse à la pédale de verrouillage 5. Or, une fois que la pédale de verrouillage 5 a atteint la position d'activation, elle devient très difficile à manœuvrer car il faudrait que le pied de l'opérateur passe sous la pédale de verrouillage 5 pour pouvoir exercer une pression sur celle-ci, afin de déclencher ce mouvement de rotation en sens inverse. Dans la position d'activation, la pédale de verrouillage 5 est tellement basse, qu'une insertion du pied entre celle-ci et le sol ne pourrait s'effectuer qu'au prix d'un gros effort qui risquerait de conduire à une blessure du pied.

En se référant aux figures 2, 6 et 7, la pédale de déverrouillage 6 est constituée d'une tige allongée 25, dont :
- une première extrémité est montée en rotation autour d'un quatrième axe de rotation 26 solidarisé au corps principal 6 dans une zone basse de celui-ci, ledit quatrième axe de rotation 26 étant placé sous le premier axe de rotation 18 autour duquel est montée en rotation la pédale de verrouillage 5, et
- une deuxième extrémité se termine par un segment 27 replié à 90°, ledit segment replié étant destiné à servir de surface d'appui pour le pied d'un opérateur désireux d'activer cette pédale de déverrouillage 6.

Ces deux extrémités doivent être considérées le long d'un axe longitudinal de la tige 25. La première extrémité de la tige 25 constituant la pédale de déverrouillage 6, porte un bras de levier 28 qui s'étend perpendiculairement à un axe longitudinal de la tige 25, et qui s'étend perpendiculairement au segment replié 27 de la deuxième extrémité de ladite tige 25. Ce bras de levier 28 porte un pion de poussée 29 qui est parallèle au quatrième axe 26 de rotation, ce pion de poussée 29 étant cylindrique et allongé. Un deuxième ressort 30 relie une zone supérieure du corps principal 3 à la collerette élargie 20 du coulisseau 7, ledit deuxième ressort 30 étant précontraint en étant étiré, et ayant donc tendance à naturellement se comprimer pour retrouver une position de relaxation. La pédale de déverrouillage 6 possède une tige secondaire 31 s'étendant parallèlement au bras de levier 28 et ayant une longueur égale à celle dudit bras de levier 28. La pédale de déverrouillage 6 est montée dans le mécanisme de déploiement du patin d'immobilisation 10 par l'intermédiaire d'un troisième ressort 32 reliant une zone supérieure du corps principal 3 à une extrémité libre de la tige secondaire 31.

L'utilisation de cette pédale de déverrouillage 6 ne peut intervenir que lorsque la pédale de verrouillage 5 est dans la position d'activation, pour laquelle le patin d'immobilisation 10 est déployé pour bloquer tout déplacement du chariot de transport 50 sur le sol. Un procédé de désactivation du patin d'immobilisation 10 au moyen de la pédale de déverrouillage 6 comprend les étapes suivantes :
- une étape de mise en rotation de la pédale de déverrouillage 6 autour du quatrième axe de rotation 26 au moyen d'une poussée exercée par le pied d'un opérateur sur le segment replié 27 de ladite pédale de déverrouillage 6, la bielle 4 étant alignée le long de la pédale de verrouillage 5,
- une étape de mise en appui du pion de poussée 29 contre la bielle 4 due à la mise en rotation de la pédale de déverrouillage 6, entrainant un déplacement de ladite bielle 4 qui commence à se désaligner de la pédale de verrouillage 5,
- une étape de compression du deuxième ressort 30 précontraint qui tend à retrouver naturellement sa position de repos, cette étape de compression s'accompagnant d'une remontée du coulisseau 7 auquel est fixée une extrémité dudit deuxième ressort 30,
- une étape de pivotement de la pédale de verrouillage 5 vers sa position de désactivation, initiée par le pion de poussée 29 et relayée par la compression du deuxième ressort 30,
- une étape de remontée du patin d'immobilisation 10 qui n'est plus en contact avec le sol.

## Revendications

1. Chariot de transport (50) comprenant une structure roulante (1), des roulettes suspendues (51, 52) sur lesquelles est montée ladite structure roulante (1), un patin d'immobilisation (10) et un mécanisme d'activation de ce patin d'immobilisation pour empêcher le chariot (50) de se déplacer sur un sol par l'intermédiaire desdites roulettes suspendues (51, 52), **caractérisé en ce que** le mécanisme d'activation du patin d'immobilisation (10) comprend :
- un corps principal (3) creux arrimé à une surface inférieure de la structure roulante et s'étendant verticalement,
- un coulisseau (7) creux se terminant par une extrémité élargie (20), ledit coulisseau (7) étant introduit dans le corps principal (3) de sorte que son extrémité élargie (20) constitue sa partie la plus basse,
- une tige (21) autour de laquelle s'étend un premier ressort (22), ladite tige (21) et ledit premier ressort (22) étant introduits dans le coulisseau (7),
- un compensateur (9) cylindrique auquel est fixé le patin d'immobilisation (10), ledit compensateur (9) étant inséré entre le premier ressort (22) et une surface interne du coulisseau (7) en venant en butée contre ledit premier ressort (22), de sorte que le patin d'immobilisation (10) émerge de l'extrémité élargie (20) du coulisseau (7),
- une pédale de verrouillage (5) montée en rotation autour d'un premier axe de rotation (18) du corps principal (3) creux, ladite pédale de verrouillage (5) étant apte à passer par rotation d'une position de désactivation pour laquelle elle s'étend horizontalement à une position d'activation pour laquelle elle s'étend verticalement,
- une bielle (4) allongée dont une extrémité supérieure est montée en rotation autour d'un deuxième axe (19) de rotation de la pédale de verrouillage (5), et dont une extrémité inférieure est montée en rotation autour d'un troisième axe de rotation (24) de l'extrémité élargie (20) du coulisseau (7), et **en ce que** lors du passage de la pédale de verrouillage (5) de la position de désactivation à la position d'activation, la bielle (4) pivote autour du deuxième axe de rotation (19) de ladite pédale de verrouillage (5) pour se retrouver alignée le long de la pédale de verrouillage (5) dans une direction sensiblement verticale, le coulisseau (7) passant simultanément d'une position remontée à une position descendue.

2. Chariot de transport selon la revendication 1, **caractérisé en ce que** la bielle (4) comprend deux bras (11, 12) écartés et parallèles, et **en ce que** le corps principal (3) comprend deux parois planes écartées et parallèles, et **en ce que** les deux bras (11, 12) de la bielle (4) enserrent les deux parois parallèles du corps principal (3) creux.

3. Chariot de transport selon la revendication 2, **caractérisé en ce que** la pédale de verrouillage (5) comprend deux tronçons (14, 15) séparés et parallèles, et **en ce que** la pédale de verrouillage (5) est montée sur le corps principal (3) en enserrant les deux bras (11, 12) de la bielle (4).

4. Chariot de transport selon l'une quelconque des revendications 1 à 3, **caractérisé en ce que** la pédale de verrouillage (4) se termine par un segment replié (16) à angle droit, et **en ce que** ledit segment replié (16) va servir de surface d'appui pour le pied d'un opérateur désireux de faire pivoter la pédale de verrouillage (5) autour du premier axe de rotation (18) vers la position d'activation.

5. Chariot de transport selon l'une quelconque des revendications 1 à 4, **caractérisé en ce que** le premier axe de rotation (18), le deuxième axe de rotation (19) et le troisième axe de rotation (24) s'étendent horizontalement.

6. Chariot de transport selon l'une quelconque des revendications 1 à 5, **caractérisé en ce que** le patin d'immobilisation (10) est cylindrique et est fixé à une extrémité du compensateur (9) cylindrique au moyen d'une vis.

7. Chariot de transport selon l'une quelconque des revendications 1 à 6, **caractérisé en ce que** le mécanisme d'activation comprend une pédale de déverrouillage (6) montée pivotante autour d'un quatrième axe de rotation (26) du corps principal (3) et possédant un pion de poussée (29), et **en ce que** ledit mécanisme comprend un deuxième ressort (30) précontraint dont une extrémité est fixée au corps principal (3) et dont une autre extrémité est fixée à l'extrémité élargie (20) du coulisseau (7), une mise en rotation de la pédale de déverrouillage (6) autour du quatrième axe de rotation (26) pour désactiver le patin d'immobilisation (10) entrainant une mise en appui du pion de poussée (29) contre la bielle (4), qui se désaligne alors de la pédale de verrouillage (5), le mouvement de la bielle (4) étant facilité par une compression du deuxième ressort (30) tendant à retrouver sa position de repos et entrainant une remontée du coulisseau (7).

8. Chariot de transport selon la revendication 7, **caractérisé en ce que** la pédale de déverrouillage (6) est reliée au corps principal (3) au moyen d'un troisième ressort (32) précontraint nécessitant l'application d'un certain effort sur la pédale de déverrouillage (6) pour vaincre ledit troisième ressort (32), lorsque la pédale de déverrouillage (6) est mise en rotation autour du quatrième axe de rotation (26) pour désactiver le patin d'immobilisation (10).

9. Procédé d'activation du patin d'immobilisation (10) d'un chariot de transport (50) conforme à l'une quelconque des revendications 1 à 8, la pédale de verrouillage (5) étant supposée être dans une position de désactivation, **caractérisé en ce qu'**il comprend les étapes suivantes :
- une étape de mise en rotation de la pédale de verrouillage (5) autour du premier axe de rotation (18) depuis la position de désactivation pour laquelle ladite pédale (5) et la bielle (4) sont écartés l'un de l'autre pour former un compas ouvert, cette mise en rotation s'effectuant au moyen d'une poussée exercée par le pied d'un opérateur sur ladite pédale de verrouillage (5) et entrainant un pivotement de la bielle (4) autour de ses deux extrémités vers une position verticale,
- une étape d'abaissement du coulisseau (7) sous l'effet du pivotement de la bielle (4) jusqu'à ce que le patin d'immobilisation (10) touche le sol, le premier ressort (22) étant précontraint jusqu'à ce que ledit patin d'immobilisation (10) touche le sol,
- une étape de poursuite de la mise en rotation de la pédale de verrouillage (5) alors que le patin d'immobilisation (10) a déjà touché le sol, jusqu'à ce que la bielle (4) arrive en bout de course dans une position verticale en étant alignée sur la pédale de verrouillage (5) pour former un compas fermé, le premier ressort (22) ayant amorcé une phase de compression juste après que le patin d'immobilisation (10) ait touché le sol, le coulisseau (7) poursuivant son abaissement,
- une étape de création d'une pression entre le sol et le dessous du chariot de transport (50) correspondant à une compression maximale du premier ressort (22) qui n'est pas une compression à 100%, puisque ce sont les suspensions (52) des roulettes (51) qui sont comprimées au maximum et qui assurent une butée mécanique pour la structure roulante (1), cette étape s'accompagnant d'une pénétration plus ou moins importante du compensateur (9) doté du patin d'immobilisation à l'intérieur du coulisseau (7),

10. Procédé de désactivation du patin d'immobilisation (10) d'un chariot de transport (50) selon l'une quelconque des revendications 7 ou 8, la pédale de verrouillage (5) étant supposée être dans une position d'activation, **caractérisé en ce qu'**il comprend les étapes suivantes :
- une étape de mise en rotation de la pédale de déverrouillage (6) autour du quatrième axe de rotation (26), cette mise en rotation s'effectuant au moyen d'une poussée exercée par le pied d'un opérateur sur ladite pédale de déverrouillage (6), la bielle (4) étant alignée le long de la pédale de verrouillage (5),
- une étape de mise en appui du pion de poussée (29) contre la bielle (4) entrainant un déplacement de ladite bielle (4) qui commence à se désaligner de la pédale de verrouillage (5),
- une étape de compression du deuxième ressort (30) précontraint qui tend à retrouver naturellement sa position de repos, cette étape de compression s'accompagnant d'une remontée du coulisseau (7) auquel est fixée une extrémité dudit deuxième ressort (30),
- une étape de pivotement de la pédale de verrouillage (5) vers sa position de désactivation, initiée par le pion de poussée (29) et relayée par la compression du deuxième ressort (30),
- une étape de remontée du patin d'immobilisation (10) qui n'est plus en contact avec le sol.

## Patentansprüche

1. Transportwagen (50), umfassend ein Fahrgestell (1), aufgehängte Rollen (51, 52), auf denen das Fahrgestell (1) montiert ist, einen Feststellfuß (10) und einen Aktivierungsmechanismus für diesen Feststellfuß, um den Wagen (50) daran zu hindern, sich über die aufgehängten Rollen (51, 52) auf dem Boden zu bewegen, **dadurch gekennzeichnet, dass** der Aktivierungsmechanismus des Feststellfußes (10) umfasst:
- einen hohlen Hauptkörper (3), der an einer unteren Fläche des Fahrgestells festgemacht ist und sich vertikal erstreckt,
- einen hohlen Schieber (7), der mit einem verbreiterten Ende (20) endet, wobei der Schieber (7) so in den Hauptkörper (3) eingeführt ist, dass sein verbreitertes Ende (20) seinen untersten Teil bildet,
- einen Schaft (21), um den sich eine erste Feder (22) erstreckt, wobei der Schaft (21) und die erste Feder (22) in den Schieber (7) eingeführt sind,
- einen zylindrischen Kompensator (9), an dem der Feststellfuß (10) befestigt ist, wobei der Kompensator (9) zwischen der ersten Feder (22) und einer Innenfläche des Schiebers (7) eingefügt ist, wobei er an die erste Feder (22) anschlägt, so dass der Feststellfuß (10) aus dem verbreiterten Ende (20) des Schiebers (7) herausragt,
- ein Verriegelungspedal (5), das um eine erste Drehachse (18) des hohlen Hauptkörpers (3) drehbar montiert ist, wobei das Verriegelungspedal (5) in der Lage ist, durch Drehung aus einer Deaktivierungsstellung, in der es sich horizontal erstreckt, in eine Aktivierungsstellung, in der es sich vertikal erstreckt, überzugehen,
- eine langgestreckte Stange (4), von der ein oberes Ende um eine zweite Drehachse (19) des Verriegelungspedals (5) drehbar montiert ist und von der ein unteres Ende um eine dritte Drehachse (24) des verbreiterten Endes (20) des Schiebers (7) drehbar montiert ist, und dass bei dem Übergang des Verriegelungspedals (5) aus der Deaktivierungsstellung in die Aktivierungsstellung die Stange (4) um die zweite Drehachse (19) des Verriegelungspedals (5) schwenkt, so dass sie entlang des Verriegelungspedals (5) in einer im Wesentlichen vertikalen Richtung ausgerichtet ist, wobei der Schieber (7) gleichzeitig aus einer angehobenen Stellung in eine abgesenkte Stellung übergeht.

2. Transportwagen nach Anspruch 1, **dadurch gekennzeichnet, dass** die Stange (4) zwei beabstandete und parallele Arme (11, 12) umfasst und dass der Hauptkörper (3) zwei beabstandete und parallele plane Wände umfasst und dass die beiden Arme (11, 12) der Stange (4) die beiden parallelen Wände des hohlen Hauptkörpers (3) einspannen.

3. Transportwagen nach Anspruch 2, **dadurch gekennzeichnet, dass** das Verriegelungspedal (5) zwei getrennte und parallele Abschnitte (14, 15) umfasst und dass das Verriegelungspedal (5) an dem Hauptkörper (3) montiert ist, indem es die beiden Arme (11, 12) der Stange (4) einspannt.

4. Transportwagen nach einem der Ansprüche 1 bis 3, **dadurch gekennzeichnet, dass** das Verriegelungspedal (4) mit einem rechtwinklig umgebogenen Segment (16) endet und dass das umgebogene Segment (16) als Auflagefläche für den Fuß einer Bedienperson dient, der das Verriegelungspedal (5) um die erste Drehachse (18) zu der Aktivierungsstellung hin schwenken lassen möchte.

5. Transportwagen nach einem der Ansprüche 1 bis 4, **dadurch gekennzeichnet, dass** sich die erste Drehachse (18), die zweite Drehachse (19) und die dritte Drehachse (24) horizontal erstrecken.

6. Transportwagen nach einem der Ansprüche 1 bis 5, **dadurch gekennzeichnet, dass** der Feststellfuß (10) zylindrisch ist und mit einer Schraube an einem Ende des zylindrischen Kompensators (9) befestigt ist.

7. Transportwagen nach einem der Ansprüche 1 bis 6, **dadurch gekennzeichnet, dass** der Aktivierungsmechanismus ein Entriegelungspedal (6) umfasst, das um eine vierte Drehachse (26) des Hauptkörpers (3) schwenkbar montiert ist und einen Druckstift (29) besitzt, und dass der Mechanismus eine vorgespannte zweite Feder (30) umfasst, von der ein Ende an dem Hauptkörper (3) befestigt ist und von der ein anderes Ende an dem verbreiterten Ende (20) des Schiebers (7) befestigt ist, wobei ein Drehen des Entriegelungspedals (6) um die vierte Drehachse (26) zum Deaktivieren des Feststellfußes (10) ein Abstützen des Druckstifts (29) an der Stange (4) bewirkt, die die Ausrichtung auf das Verriegelungspedal (5) daraufhin verlässt, wobei die Bewegung der Stange (4) durch ein Zusammendrücken der zweiten Feder (30) erleichtert wird, die bestrebt ist, in die Ruhestellung zurückzukehren, und eine Aufwärtsbewegung des Schiebers (7) bewirkt.

8. Transportwagen nach Anspruch 7, **dadurch gekennzeichnet, dass** das Entriegelungspedal (6) mit dem Hauptkörper (3) über eine vorgespannte dritte Feder (32) verbunden ist, die das Aufbringen einer bestimmten Kraft auf das Entriegelungspedal (6) erfordert, um die dritte Feder (32) zu überwinden, wenn das Entriegelungspedal (6) um die vierte Drehachse (26) gedreht wird, um den Feststellfuß (10) zu deaktivieren.

9. Verfahren zum Aktivieren des Feststellfußes (10) eines Transportwagens (50) nach einem der Ansprüche 1 bis 8, wobei angenommen wird, dass sich das Verriegelungspedal (5) in einer Deaktivierungsstellung befindet, **dadurch gekennzeichnet, dass** es die folgenden Schritte umfasst:
- einen Schritt des Drehens des Verriegelungspedals (5) um die erste Drehachse (18) aus der Deaktivierungsstellung heraus, in der das Pedal (5) und die Stange (4) voneinander beabstandet sind, um eine offene Schere zu bilden, wobei dieses Drehen durch einen von dem Fuß einer Bedienperson auf das Verriegelungspedal (5) ausgeübten Druck erfolgt und ein Schwenken der Stange (4) um ihre beiden Enden hin zu einer vertikalen Stellung bewirkt,
- einen Schritt des Absenkens des Schiebers (7) unter der Wirkung des Schwenkens der Stange (4), bis der Feststellfuß (10) den Boden berührt, wobei die erste Feder (22) vorgespannt ist, bis der Feststellfuß (10) den Boden berührt,
- einen Schritt des Fortsetzens des Drehens des Verriegelungspedals (5), obwohl der Feststellfuß (10) den Boden bereits berührt hat, bis die Stange (4) am Ende des Hubs eine vertikale Stellung erreicht, wobei sie auf das Verriegelungspedal (5) ausgerichtet ist, um eine geschlossene Schere zu bilden, wobei die erste Feder (22), unmittelbar nachdem der Feststellfuß (10) den Boden berührt hat, eine Zusammendrückphase begonnen hat, wobei der Schieber (7) sein Absenken fortsetzt,
- einen Schritt des Erzeugens eines Drucks zwischen dem Boden und der Unterseite des Transportwagens (50), der einem maximalen Zusammendrücken der ersten Feder (22) entspricht, das kein Zusammendrücken zu 100 % ist, weil es die Aufhängungen (52) der Rollen (51) sind, die maximal zusammengedrückt sind und die einen mechanischen Anschlag für das Fahrgestell (1) gewährleisten, wobei dieser Schritt mit einem mehr oder weniger starken Eindringen des mit dem Feststellfuß versehenen Kompensators (9) in den Schieber (7) einhergeht.

10. Verfahren zum Deaktivieren des Feststellfußes (10) eines Transportwagens (50) nach einem der Ansprüche 7 oder 8, wobei angenommen wird, dass sich das Verriegelungspedal (5) in einer Aktivierungsstellung befindet, **dadurch gekennzeichnet, dass** es die folgenden Schritte umfasst:
- einen Schritt des Drehens des Entriegelungspedals (6) um die vierte Drehachse (26), wobei dieses Drehen durch einen von dem Fuß einer Bedienperson auf das Entriegelungspedal (6) ausgeübten Druck erfolgt, wobei die Stange (4) entlang des Verriegelungspedals (5) ausgerichtet ist,
- einen Schritt des Abstützens des Druckstifts (29) an der Stange (4), was eine Verlagerung der Stange (4) bewirkt, die beginnt, die Ausrichtung auf das Verriegelungspedal (5) zu verlassen,
- einen Schritt des Zusammendrückens der vorgespannten zweiten Feder (30), die bestrebt ist, natürlich in ihre Ruhestellung zurückzukehren, wobei dieser Schritt des Zusammendrückens mit einer Aufwärtsbewegung des Schiebers (7) einhergeht, an dem ein Ende der zweiten Feder (30) befestigt ist,
- einen Schritt des Schwenkens des Verriegelungspedals (5) hin zu seiner Deaktivierungsstellung, der durch den Druckstift (29) eingeleitet wird und durch das Zusammendrücken der zweiten Feder (30) weitergeführt wird,
- einen Schritt des Aufwärtsbewegens des Feststellfußes (10), der nicht mehr mit dem Boden in Kontakt ist.

## Claims

1. Transport trolley (50) comprising a rolling structure (1), suspended castors (51, 52) on which said rolling structure (1) is mounted, an immobilizing pad (10) and a mechanism for activating said immobilizing pad to prevent the trolley (50) from moving on a ground on said suspended castors (51, 52), **characterized in that** the activation mechanism of the immobilizing pad (10) comprises:
- a hollow main body (3) secured to a lower surface of the rolling structure and extending vertically,
- a hollow slide (7) terminating in a widened end (20), said slide (7) being inserted into the main body (3) so that its widened end (20) constitutes its lowest part,
- a rod (21) about which a first spring (22) extends, said rod (21) and said first spring (22) being inserted into the slide (7),
- a cylindrical compensator (9) to which the immobilizing pad (10) is fastened, said compensator (9) being inserted between the first spring (22) and an inner surface of the slide (7) coming into abutment against said first spring (22), so that the immobilizing pad (10) emerges from the widened end (20) of the slide (7),
- a locking pedal (5) mounted in rotation about a first rotation axis (18) of the hollow main body (3), said locking pedal (5) being rotatable from a deactivation position in which it extends horizontally to an activation position in which it extends vertically,
- an elongate connecting member (4), an upper end of which is mounted in rotation about a second rotation axis (19) of the locking pedal (5), and a lower end of which is mounted in rotation about a third rotation axis (24) of the widened end (20) of the slide (7), and **in that** when the locking pedal (5) is moved from the deactivation position to the activation position, the connecting member (4) pivots about the second rotation axis (19) of said locking pedal (5) so as to be realigned along the locking pedal (5) in a substantially vertical direction, the slide (7) simultaneously moving from a raised position to a lowered position.

2. Transport trolley according to Claim 1, **characterized in that** the connecting member (4) comprises two spaced apart, parallel arms (11, 12), and **in that** the main body (3) comprises two spaced apart, parallel planar walls, and **in that** the two arms (11, 12) of the connecting member (4) enclose the two parallel walls of the hollow main body (3).

3. Transport trolley according to Claim 2, **characterized in that** the locking pedal (5) comprises two separate, parallel sections (14, 15), and **in that** the locking pedal (5) is mounted on the main body (3) enclosing the two arms (11, 12) of the connecting member (4).

4. Transport trolley according to any one of Claims 1 to 3, **characterized in that** the locking pedal (4) terminates in a segment (16) folded at right angles, and **in that** said folded segment (16) acts as a bearing surface for the foot of an operator wishing to pivot the locking pedal (5) about the first rotation axis (18) towards the activation position.

5. Transport trolley according to any one of Claims 1 to 4, **characterized in that** the first rotation axis (18), the second rotation axis (19) and the third rotation axis (24) extend horizontally.

6. Transport trolley according to any one of Claims 1 to 5, **characterized in that** the immobilizing pad (10) is cylindrical and is fastened to one end of the cylindrical compensator (9) by means of a screw.

7. Transport trolley according to any one of Claims 1 to 6, **characterized in that** the activation mechanism comprises an unlocking pedal (6) pivotingly mounted about a fourth rotation axis (26) of the main body (3) and having a push pin (29), and **in that** said mechanism includes a second preloaded spring (30) of which one end is fastened to the main body (3) and another end is fastened to the widened end (20) of the slide (7), a rotation of the unlocking pedal (6) about the fourth rotation axis (26) to deactivate the immobilizing pad (10) causing the push pin (29) to bear against the connecting member (4), which is then offset from the locking pedal (5), the movement of the connecting member (4) being facilitated by a compression of the second spring (30), which tends to return to its rest position and causes the slide (7) to rise.

8. Transport trolley according to Claim 7, **characterized in that** the unlocking pedal (6) is connected to the main body (3) by means of a third preloaded spring (32) requiring the application of a given force on the unlocking pedal (6) to overcome said third spring (32), when the unlocking pedal (6) is rotated about the fourth rotation axis (26) to deactivate the immobilizing pad (10).

9. Method of activating the immobilizing pad (10) of a transport trolley (50) according to any one of Claims 1 to 8, the locking pedal (5) being assumed to be in a deactivation position, **characterized in that** it comprises the following steps:
- a step of rotating the locking pedal (5) about the first rotation axis (18) from the deactivation position, in which said pedal (5) and the connecting member (4) are separated from each other to form an open angle, this rotation being effected by the foot of an operator pushing said locking pedal (5) and causing the connecting member (4) to pivot about its two ends towards a vertical position,
- a step of lowering the slide (7) under the effect of the pivoting of the connecting member (4) until the immobilizing pad (10) touches the ground, the first spring (22) being preloaded until said immobilizing pad (10) touches the ground,
- a step of continuing the rotation of the locking pedal (5) once the immobilizing pad (10) has touched the ground, until the connecting member (4) reaches the end of travel in a vertical position, aligned with the locking pedal (5) to form a closed angle, the first spring (22) initiating a compression phase just after the immobilizing pad (10) touches the ground, the slide (7) continuing to move downwards,
- a step of creating a pressure between the ground and the underside of the transport trolley (50) corresponding to a maximum compression of the first spring (22) which is not a 100% compression, since it is the suspensions (52) of the castors (51) which are fully compressed and which provide a mechanical stop for the rolling structure (1), this step being accompanied by a greater or lesser penetration of the compensator (9) fitted with the immobilizing pad inside the slide (7).

10. Method of deactivating the immobilizing pad (10) of a transport trolley (50) according to either one of Claims 7 and 8, the locking pedal (5) being assumed to be in an activation position, **characterized in that** it comprises the following steps:
- a step of rotating the unlocking pedal (6) about the fourth rotation axis (26), this rotation being effected by the foot of an operator pushing said unlocking pedal (6), the connecting member (4) being aligned along the locking pedal (5),
- a step of the push pin (29) bearing against the connecting member (4) to move said connecting member (4) which begins to be offset from the locking pedal (5),
- a step of compressing the preloaded second spring (30) which tends to naturally return to its rest position, this compression step being accompanied by a rise of the slide (7) to which one end of said second spring (30) is fastened,
- a step of pivoting the locking pedal (5) towards its deactivation position, initiated by the push pin (29) and relayed by the compression of the second spring (30),
- a step of raising the immobilizing pad (10) which is no longer in contact with the ground.
